# EUROPÄISCHE PATENTSCHRIFT

(11) **EP 2 446 794 B1**
(45) Veröffentlichungstag und Bekanntmachung des Hinweises auf die Patenterteilung: **15.08.2018**
(21) Anmeldenummer: 11185195.2
(22) Anmeldetag: 14.10.2011
(51) Int. Cl.: A47L 9/20, B01D 46/00

(54) **Filterreinigungssystem für einen Staubsauger**
Filter cleaning system for a vacuum cleaner
Système de nettoyage de filtre pour un aspirateur

(30) Priorität: 29.10.2010 DE 102010043169
(43) Veröffentlichungstag der Anmeldung: 02.05.2012
(73) Patentinhaber: BSH Hausgeräte GmbH, 81739 München (DE)
(72) Erfinder: Krammer, Michael, 97659 Schönau (DE); Ullrich, Christian, 97519 Riedbach (DE)

(56) Entgegenhaltungen:
- EP-A1- 1 166 705
- WO-A1-98/34714
- WO-A1-2004/100752
- DE-U1- 29 521 391

## Beschreibung

Die Erfindung betrifft ein abreinigbares Filtersystem, insbesondere ein Feinstaubfiltersystem, für einen Staubsauger, sowie einen Staubsauger mit einem derartigen Filtersystem.

Es gibt bereits verschiedene Ausführungen von so genannten beutellosen Staubsaugern, welche mit Fliehkraftabscheidern arbeiten. Bei einem großen Teil dieser Staubsauger ist der Staubsammelbehälter direkt mit dem Fliehkraftabscheider kombiniert und als ein Bauteil ausgeführt. Der Fliehkraftabscheider befindet sich beispielsweise im Inneren des Staubsammelbehälters, der Schmutz wird in dem den Fliehkraftabscheider umgebenden Behälter gesammelt. Außerdem gibt es auch nach dem Fliehkraftprinzip arbeitende Staubsauger, die einen vom Fliehkraftabscheider separierten Staubsammelbehälter aufweisen.

Ein Fliehkraftabscheider erreicht jedoch prinzipbedingt in der Regel keine ausreichende Abscheideffizienz. Deshalb sind dem Fliehkraftabscheider in Saugstromrichtung häufig Filterelemente, z.B. in Form von Feinstaubfiltern nachgeschaltet, welche die Abscheideffizienz weiter erhöhen. Da durch das Filterelement aber während des Betriebs des Staubsaugers kontinuierlich Feststoffe zurückgehalten werden, bildet sich im Laufe der Zeit ein sogenannter Filterkuchen. Der Filterkuchen wächst im Laufe der Filtration an und wird sukzessive "dicker". Mit zunehmender Schichtdicke des Filterkuchens ergibt sich aber der negative Effekt eines steigenden Strömungswiderstandes des Filterkuchens. Letzteres führt zu einem zunehmenden Leistungsbedarf zur Durchströmung des Filters bzw. bei begrenzter Leistung zu einer stetigen Abnahme des Volumenstroms durch den Filter und damit der Saugleistung.

Um diesem Effekt entgegenzuwirken, ist es unerlässlich, das Filterelement regelmäßig zu reinigen oder auszutauschen. Der Austausch oder auch die Reinigung erfolgten in der Vergangenheit in der Regel manuell. Um den zusätzlichen manuellen Aufwand zu vermeiden wurden auch selbstreinigende Systeme entwickelt, wobei die Reinigung vorzugsweise auch ohne Unterbrechung des Saugbetriebs erfolgen kann.

Ein derartiges abreinigbares Filtersystem ist beispielsweise aus der WO 2008/043440 A1 bekannt. Dabei wird ein Schwebstofffilter während eines Saugvorganges segmentweise zyklisch durch einen Gegenluftstrom abgereinigt. Ein anderes Filtersystem gemäß dem Oberbegriff des Anspruchs 1 ist ebenfalls in EP-A-1166705 gezeigt. Der Erfindung liegt die Aufgabe zugrunde, ein Filtersystem, insbesondere ein Feinstaubfiltersystem, für einen Staubsauger mit einem Filterelement und einer zugehörigen Reinigungsvorrichtung zu schaffen, bei welchem ein verbesserter Reinigungsgrad erzielt wird, bei gleichzeitigem geringerem bedarf an Reinigungsluft.. Diese Aufgabe wird erfindungsgemäß durch ein Filtersystem mit den Merkmalen gemäß Patentanspruch 1 gelöst.
Demgemäß umfasst ein Filtersystem, insbesondere Feinstaubfiltersystem, für einen Staubsauger ein Filterelement zum Ausfiltern von Staub- und/oder Schmutzpartikeln aus staubbeladener Luft und eine Reinigungsvorrichtung für das Filterelement, welche eine Luftaustrittsseite des Filterelements während eines Reinigungsvorgangs mit mindestens einem Reinigungsluftstrahl beaufschlagt. Erfindungsgemäß ist die Reinigungsvorrichtung derart ausgestaltet, dass der mindestens eine Reinigungsluftstrahl das Filterelement im Wesentlichen punktförmig trifft und während eines Reinigungsvorgangs die gesamte Oberfläche des Filterelements von dem mindestens einen Reinigungsluftstrahl überfahren wird.
Wird das Filterelement, wie aus dem Stand der Technik bekannt, mit einem Reinigungsluftstrahl beaufschlagt, welcher das Filterelement relativ großflächig trifft, so wird sich der Reinigungsluftstrom den Weg des geringsten Widerstands suchen, das heißt der Reinigungsluftstrom wird überwiegend nur diejenigen Bereiche reinigen, in welchen eine geringere Verschmutzung vorliegt, das heißt an welchen der Filterkuchen eine geringere Dicke aufweist. Demzufolge basiert die Grundidee der Erfindung darauf, das Filterelement mit einem Reinigungsluftstrom zu beaufschlagen, welcher das Filterelement im Wesentlichen punktförmig trifft. Auf diese Weise wird ein vordefinierter enger Reinigungsbereich geschaffen, ohne dass ein alternativer Luftpfad für die Reinigungsluft zur Verfügung steht. In diesem engen Reinigungsbereich werden damit Staub- oder Schmutzpartikel mit hohem Wirkungsgrad ausgeblasen. Diese Partikel können dann in einem Staubsammelbehälter gesammelt werden. Durch das Überfahren der gesamten Oberfläche des Filterelements wird damit die Reinigungswirkung flächendeckend deutlich erhöht.

Um eine Beeinträchtigung der Saugleistung des Staubsaugers gänzlich zu vermeiden, wird ein Reinigungsvorgang vorzugsweise während einer Unterbrechung des Saugbetriebs des Staubsaugers durchgeführt.

Um eine besonders gute Reinigungswirkung zu erzielen, ist ein Druck des Reinigungsluftstrahles größer als ein Druck der zu filternden staubbeladenen Luft. Dies ermöglicht zusätzlich, dass ein Reinigungsvorgang zumindest teilweise während eines Saugbetriebs durchgeführt wird.

Um die Reinigungswirkung weiter zu erhöhen, kann das Filterelement während des Betriebs des Staubsaugers kontinuierlich mit einem Reinigungsluftstrahl beaufschlagt werden.

Häufig ist das Filtersystem in einem Staubsauger als hohlzylindrische Filterkartusche ausgestaltet. In diesem Fall kann die Reinigungsvorrichtung ohne Bedarf an zusätzlichem Bauraum innerhalb der Filterkartusche angeordnet sein.

Erfindungsgemäß muss die Reinigungsvorrichtung einen Reinigungsluftstrahl erzeugen, welcher das Filterelement im Wesentlichen punktförmig trifft. Zusätzlich muss der Reinigungsluftstrom während eines Reinigungsvorgangs die gesamte Oberfläche des Filterelements überfahren. Diese Anforderungen können auf vielfältige Weise realisiert werden. Es können beispielweise eine oder mehrere Düsen vorgesehen sein, welche einen im Wesentlichen linienförmigen Luftstrahl auf das Filterelement richten, und welche hinsichtlich Ihrer Position und/oder ihrer Strahlrichtung veränderlich sind.

Ist das Filtersystem als hohlzylindrische Filterkartusche ausgestaltet und die Reinigungsvorrichtung innerhalb der Filterkartusche angeordnet, so ist es gemäß einer Ausführungsform der Erfindung vorgesehen, dass die Reinigungsvorrichtung eine erste hohlzylindrische Hülse mit mindestens einem ersten Schlitz und eine innerhalb der ersten Hülse konzentrisch angeordnete zweite hohlzylindrische Hülse umfasst, welche mindestens einen zweiten Schlitz aufweist. Dabei verläuft der erste oder zweite Schlitz spiralförmig über die Hülse und der zweite bzw. erste Schlitz verläuft in axialer Richtung der Hülse. Außerdem ist mindestens eine der Hülsen drehbar gelagert. Diese konstruktiv sehr einfach ausführbare Anordnung mit derartigen Schlitzen führt dazu, dass sich die Schlitze jeweils nur in einem Punkt schneiden, durch welchen ein im Wesentlichen linienförmiger Reinigungsluftstrom austreten kann, welcher das Filterelement dann punktförmig trifft. Alternativ hierzu kann die Reinigungsvorrichtung auch außerhalb der Filterkartusche angeordnet sein. bevorzugt sind die Strömungsrichtungen des Reinigungsluftstroms und der staubbeladenen Luft gegensinnig gerichtet, so dass die Staubpartikel aus dem Filter herausgeblasen werden. Alternativ kann die Strömungsrichtung des Reinigungsluftstroms und der staubbeladenen Luft auch gleichsinnig gerichtet sein, so dass bei geeignetem Filtermaterial die Staubpartikel durch das Filter hindurchgeblasen werden.

Um einen Reinigungsvorgang in möglichst kurzer Zeit abzuschließen, ist es vorteilhaft, wenn sich der spiralförmige Schlitz mindestens um den gesamten Umfang der Hülse erstreckt. Der spiralförmige Schlitz kann sich aber auch mehrfach um den Umfang der Hülse erstrecken.

Um bei einer derartigen Ausführungsform der Reinigungsvorrichtung ein Überfahren der gesamten Oberfläche des Filterelement zu erreichen, ist es gemäß einer Ausführungsform der Erfindung vorgesehen, dass die Filterkartusche drehfest ausgeführt ist und sich die erste Hülse und die zweite Hülse während eines Reinigungsvorganges mit unterschiedlichen Drehzahlen drehen.

Alternativ dazu kann auch die erste oder zweite Hülse drehfest ausgeführt sein. In diesem Fall drehen sich die zweite bzw. erste Hülse sowie die Filterkartusche während eines Reinigungsvorganges mit unterschiedlichen Drehzahlen.

Gemäß einer Ausführungsform der Erfindung ist die zweite Hülse an einem Ende verschlossen und weist an ihrem nicht verschlossenen Ende einen Lufteinlass auf, durch welchen Reinigungsluft in die zweite Hülse eingeleitet werden kann. Auf diese Weise wird mit einfachen konstruktiven Mitteln ein Reinigungsluftstrom erzeugt. Als Reinigungsluft kann dabei im einfachsten Fall die Abluft/Reinluft genutzt werden.

Die Erfindung schafft außerdem einen Staubsauger mit einem Fliehkraftabscheider, in welchen staubbeladene Luft einleitbar ist und durch welchen Staub aus der staubbeladenen Luft abscheidbar ist, wobei dem Fliehkraftabscheider in Saugstromrichtung ein erfindungsgemäßes Filtersystem nachgeschaltet ist, über welches die durch den Fliehkraftabscheider vorgefilterte Luft geleitet wird

Weitere Merkmale und Vorteile der Erfindung werden nachfolgend anhand von Ausführungsbeispielen mit Bezugnahme auf die beigefügten Figuren erläutert.

Es zeigen:
- Fig. 1: eine schematische perspektivische Darstellung einer bevorzugten Ausführungsform eines erfindungsgemäßen Filtersystems,
- Fig. 2: eine schematische perspektivische Darstellung einer Reinigungsvorrichtung des Filtersystems gemäß Figur 1,
- Fig. 3: eine schematische Querschnittsdarstellung der Reinigungsvorrichtung gemäß Figur 2,
- Fig. 4: eine schematische Querschnittsdarstellung der Reinigungsvorrichtung gemäß der Figuren 2 und 3 entlang der Schnittfläche A-A und
- Fig. 5: eine schematische Querschnittsdarstellung der Reinigungsvorrichtung gemäß der Figuren 2 und 3 entlang der Schnittfläche B-B.

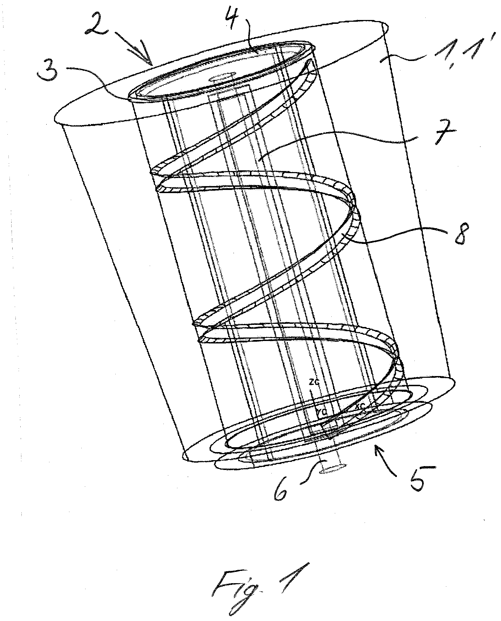

In Figur 1 ist schematisch ein Filtersystem dargestellt, welches ein Filterelement 1 in Form einer hohlzylindrischen Filterkartusche 1' zum Ausfiltern von Staub- und/oder Schmutzpartikeln aus staubbeladener Luft in einem ansonsten nicht dargestellten Staubsauger und eine Reinigungsvorrichtung 2 für das Filterelement 1 aufweist. Derartige Filterelemente 1 werden häufig in Staubsaugern mit einem Fliehkraftabscheider als Feinstaubfilter eingesetzt. Dabei ist staubbeladene Luft in den Fliehkraftabscheider einleitbar, durch welchen Staub aus der staubbeladenen Luft abscheidbar ist. Die Filterkartusche 1' ist dabei innerhalb des Fliehkraftabscheiders angeordnet und dementsprechend dem Fliehkraftabscheider in Saugstromrichtung nachgeschaltet. Um Staub- und/oder Schmutzpartikel aus der durch den Fliehkraftabscheider zwar vorgefilterten, aber aufgrund der prinzipbedingt eingeschränkten Filtereffektivität des Fliehkraftabscheiders immer noch staubbeladenen Luft auszufiltern, wird die durch den Fliehkraftabscheider vorgefilterte Luft über das Filterelement geleitet. Derartige Staubsauger mit Fliehkraftabscheider sind aber bekannt und daher an dieser Stelle nicht näher dargestellt und beschrieben.

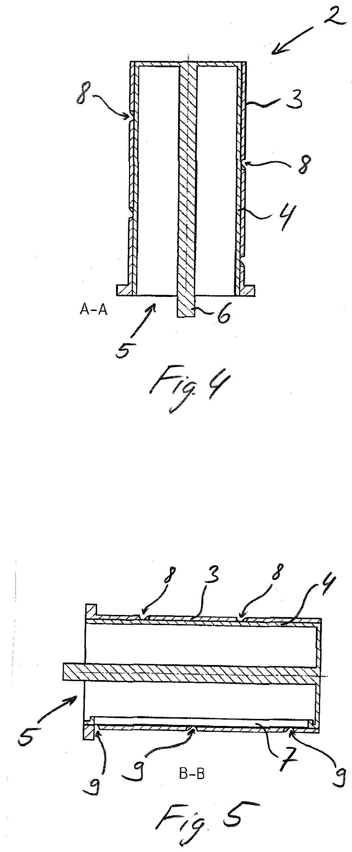

Die Reinigungsvorrichtung 2 ist dabei innerhalb der Filterkartusche 1' angeordnet und umfasst eine drehbar gelagerte erste hohlzylindrische Hülse 3 und eine innerhalb der ersten Hülse 3 konzentrisch angeordnete und ebenfalls drehbar gelagerte zweite hohlzylindrische Hülse 4. Die zweite hohlzylindrische Hülse 4 ist dabei an einem Ende verschlossen (vgl. Fig. 4 und 5) und weist an ihrem nicht verschlossenen Ende einen Lufteinlass 5 auf, durch welchen Reinigungsluft in die zweite Hülse eingeleitet werden kann. Zum Antrieb der zweiten Hülse ist außerdem eine Achse 6 vorgesehen, welche drehest mit der Hülse 4 verbunden ist.

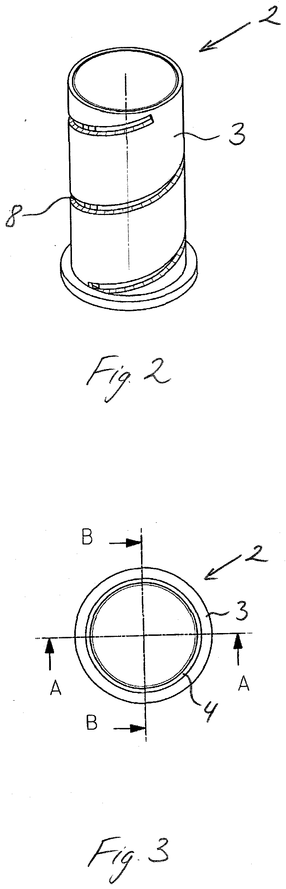

Die zweite Hülse 4 weist einen ersten Schlitz 7 auf, welcher in axialer Richtung der Hülse verläuft und sich im Wesentlichen über die gesamte axiale Länge der zweiten Hülse 4 erstreckt. Die erste Hülse 3 weist einen zweiten Schlitz 8 auf, welcher spiralförmig über die erste Hülse 3 verläuft und sich dabei in axialer Richtung im Wesentlichen über die gesamte axiale Länge der ersten Hülse 3 (vgl. Figur 5) und in Umfangsrichtung etwas mehr als zweimal um den gesamten Umfang der ersten Hülse erstreckt (vgl. Fig. 2). Diese Ausgestaltung der Schlitze 7 und 8 führt dazu, dass sich die beiden Schlitze 7 und 8 jeweils punktförmig schneiden. Diese Schnittpunkte sind in Figur 5 mit dem Bezugszeichen 9 bezeichnet.

Wird nun im Rahmen eines Reinigungsvorganges über den Lufteinlass 5 Reinigungsluft, z.B. in Form der Abluft/Reinluft des Staubsaugers in die zweite Hülse 4 eingeleitet, so tritt diese an den Schnittpunkten 9 der Schlitze 7 und 8 als linienförmige Reinigungsluftstrahlen aus, welche das die Reinigungsvorrichtung 2 umgebende Filterelement 1 punktförmig treffen. Die Reinigungsvorrichtung 2 beaufschlagt demgemäß eine Luftaustrittsseite des Filterelements 1 mit einem oder in dem dargestellten Ausführungsbeispiel mehreren Reinigungsluftstrahlen, welche entgegengesetzt zu einem Saugluftstrom gerichtet sind, so dass festgesetzte Schmutz- und/oder Staubpartikel aus dem Filterelement 1 ausgeblasen werden.

Um die gesamte Oberfläche des Filterelements 1 zu reinigen, ist es erforderlich, dass während eines Reinigungsvorgangs die gesamte Oberfläche des Filterelements 1 von dem/den Reinigungsluftstrahl(en) überfahren wird. Um dies zu erreichen sind die beiden Hülsen 3 und 4 drehbar gelagert und drehen sich während des Reinigungsvorganges mit unterschiedlichen Drehzahlen. Die Filterkartusche 1' ist bei einer derartigen Ausführungsform drehfest ausgeführt.

Alternativ dazu kann das Überstreichen der gesamten Filteroberfläche aber auch dadurch realisiert sein, dass die erste Hülse 3 oder die zweite Hülse 4 drehfest ausgeführt sind und sich die nicht drehfest ausgeführte Hülse, also die zweite Hülse 4 bzw. erste Hülse 3, sowie die Filterkartusche 1' während eines Reinigungsvorganges mit unterschiedlichen Drehzahlen drehen.

Die Hülsen 3 und/oder 4 sowie ggf. die Filterkartusche 1' können dabei über gesonderte Antriebseinheiten, z.B. in Form eines Elektromotors, oder auch durch entsprechende konstruktive Ausgestaltung und geeignete Luftführung durch den Luftstrom selbst angetrieben werden.

Um die Saugleistung des Staubsaugers nicht zu beeinträchtigen, ist es möglich, einen Reinigungsvorgang ausschließlich während einer Unterbrechung des Saugbetriebs, also in Saugpausen, durchzuführen. Ist die Reinigungsvorrichtung 2 aber so ausgelegt, dass der Druck des Reinigungsluftstrahls oder der Reinigungsluftstrahlen höher ist als der Druck der zu filternden staubbeladenen Luft, so kann ein Reinigungsvorgang zumindest teilweise auch während des Saugbetriebs durchgeführt werden. Im Extremfall ist es dann sogar möglich, das Filterelement 1 während des Betriebs des Staubsaugers kontinuierlich mit einem Reinigungsluftstrahl zu beaufschlagen.

Die Erfindung wurde anhand einer bevorzugten Ausführungsform beispielhaft für ein Filterelement in Form einer Filterkartusche erläutert, ist aber grundsätzlich unabhängig von der Geometrie des Filterelements anwendbar. Auch die Ausführung der Reinigungsvorrichtung ist lediglich beispielhaft zu sehen und kann auf vielfältige Art und Weise variiert werden. Entscheidend ist lediglich, dass zumindest ein Reinigungsluftstrahl das Filterelement im Wesentlichen punktförmig trifft und während eines Reinigungsvorgangs die gesamte Oberfläche des Filterelements von dem mindestens einen Reinigungsluftstrahl überfahren wird. Dazu kann beispielsweise auch eine entsprechende Düsenanordnung eingesetzt werden.

### Verwendete Bezugszeichen:

- 1: Filterelement
- 1': Filterkartusche
- 2: Reinigungsvorrichtung
- 3: erste Hülse
- 4: zweite Hülse
- 5: Lufteinlass
- 6: Achse
- 7: erster Schlitz
- 8: zweiter schlitz
- 9: Schnittpunkte (der Schlitze)

## Patentansprüche

1. Filtersystem, insbesondere Feinstaubfiltersystem, für einen Staubsauger mit
- einem Filterelement (1) zum Ausfiltern von Staub- und/oder Schmutzpartikeln aus staubbeladener Luft,
- einer Reinigungsvorrichtung (2) für das Filterelement (1), welche eine Luftaustrittsseite des Filterelements (1) während eines Reinigungsvorgangs mit mindestens einem Reinigungsluftstrahl beaufschlagt,
wobei die Reinigungsvorrichtung (2) derart ausgestaltet ist, dass der mindestens eine Reinigungsluftstrahl das Filterelement (1) im Wesentlichen punktförmig trifft und während eines Reinigungsvorgangs die gesamte Oberfläche des Filterelements (1) von dem mindestens einen Reinigungsluftstrahl überfahren wird, **dadurch gekennzeichnet, dass** die Reinigungsvorrichtung (2) eine erste hohlzylindrische Hülse (3) mit mindestens einem ersten Schlitz (7) und eine innerhalb der ersten Hülse (3) konzentrisch angeordnete zweite hohlzylindrische Hülse (4), welche mindestens einen zweiten Schlitz (8) aufweist, wobei der erste (7) oder zweite Schlitz (8) spiralförmig über die Hülse (3; 4) verläuft und der zweite (8) bzw. erste Schlitz (7) in axialer Richtung der Hülse (3; 4) verläuft und mindestens eine der Hülsen (3; 4) drehbar gelagert ist.

2. Filtersystem nach Anspruch 1, **dadurch gekennzeichnet, dass** ein Reinigungsvorgang während einer Unterbrechung des Saugbetriebs des Staubsaugers durchgeführt wird.

3. Filtersystem nach Anspruch 1, **dadurch gekennzeichnet, dass** ein Druck des Reinigungsluftstrahles größer ist als ein Druck der zu filternden staubbeladenen Luft.

4. Filtersystem nach Anspruch 3, **dadurch gekennzeichnet, dass** ein Reinigungsvorgang zumindest teilweise während eines Saugbetriebs durchgeführt wird.

5. Filtersystem nach Anspruch 4, **dadurch gekennzeichnet, dass** das Filterelement (1) während des Betriebs des Staubsaugers kontinuierlich mit einem Reinigungsluftstrahl beaufschlagt wird.

6. Filtersystem nach einem der vorhergehenden Ansprüche, **dadurch gekennzeichnet, dass** das Filterelement (1) als hohlzylindrische Filterkartusche (1') ausgestaltet ist und die Reinigungsvorrichtung (2) innerhalb der Filterkartusche (1') angeordnet ist.

7. Filtersystem nach Anspruch 1 **dadurch gekennzeichnet, dass** sich der spiralförmige Schlitz (7; 8) sich mindestens um den gesamten Umfang der Hülse (3; 4) erstreckt.

8. Filtersystem nach einem der Ansprüche 6 oder 7, **dadurch gekennzeichnet, dass** die Filterkartusche (1') drehfest ausgeführt ist und sich die erste Hülse (3) und die zweite Hülse (4) während eines Reinigungsvorganges mit unterschiedlichen Drehzahlen drehen.

9. Filtersystem nach einem der Ansprüche 6 oder 7, **dadurch gekennzeichnet, dass** die erste (3) oder zweite Hülse (4) drehfest ausgeführt sind und sich die zweite (4) bzw. erste Hülse (3) sowie die Filterkartusche (1') während eines Reinigungsvorganges mit unterschiedlichen Drehzahlen drehen.

10. Filtersystem nach einem der Ansprüche 6 bis 9, **dadurch gekennzeichnet, dass** die zweite Hülse (4) an einem Ende verschlossen ist und an ihrem nicht verschlossenen Ende einen Lufteinlass (5) aufweist, durch welchen Reinigungsluft in die zweite Hülse (4) eingeleitet werden kann.

11. Staubsauger mit einem Fliehkraftabscheider, in welchen staubbeladene Luft einleitbar ist und durch welchen Staub aus der staubbeladenen Luft abscheidbar ist, wobei dem Fliehkraftabscheider in Saugstromrichtung ein Filtersystem gemäß einem der Ansprüche 1 bis 10 nachgeschaltet ist, über welches die durch den Fliehkraftabscheider vorgefilterte Luft geleitet wird

## Claims

1. Filter system, in particular particulate filter system, for a vacuum cleaner having
- a filter element (1) for filtering out particles of dust and/or dirt from dust-laden air,
- a cleaning device (2) for the filter element (1) which applies at least one jet of cleaning air to an air outlet side of the filter element (1) during a cleaning process,
wherein the cleaning device (2) is configured such that the at least one jet of cleaning air hits the filter element (1) in an essentially punctiform manner and during a cleaning process the entire surface of the filter element (1) is traversed by the at least one jet of cleaning air, **characterised in that** the cleaning device (2) comprises a first hollow cylindrical sleeve (3) with at least one first slot (7) and a second hollow cylindrical sleeve (4) which is arranged concentrically inside the first sleeve (3) and has at least one second slot (8), wherein the first (7) or second slot (8) runs spirally over the sleeve (3; 4) and the second (8) or first slot (7) runs in the axial direction of the sleeve (3; 4) and at least one of the sleeves (3; 4) is rotatably mounted.

2. Filter system according to claim 1, **characterised in that** a cleaning process is performed during an interruption of the suction operation of the vacuum cleaner.

3. Filter system according to claim 1, **characterised in that** a pressure of the jet of cleaning air is greater than a pressure of the dust-laden air to be filtered.

4. Filter system according to claim 3, **characterised in that** a cleaning process is performed at least partially during a suction operation.

5. Filter system according to claim 4, **characterised in that** a jet of cleaning air is continuously applied to the filter element (1) during the operation of the vacuum cleaner.

6. Filter system according to one of the preceding claims, **characterised in that** the filter element (1) is configured as a hollow cylindrical filter cartridge (1') and the cleaning device (2) is arranged inside the filter cartridge (1').

7. Filter system according to claim 1, **characterised in that** the spiral slot (7; 8) extends at least around the entire circumference of the sleeve (3; 4).

8. Filter system according to one of claims 6 or 7, **characterised in that** the filter cartridge (1') is embodied as rotationally fixed and the first sleeve (3) and the second sleeve (4) rotate at different speeds during a cleaning process.

9. Filter system according to one of claims 6 or 7, **characterised in that** the first (3) or second sleeve (4) are embodied as rotationally fixed and the second (4) or first sleeve (3) together with the filter cartridge (1') rotate at different speeds during a cleaning process.

10. Filter system according to one of claims 6 to 9, **characterised in that** the second sleeve (4) is closed at one end and at its non-closed end has an air inlet (5), through which cleaning air can be introduced into the second sleeve (4).

11. Vacuum cleaner having a centrifugal force separator, into which dust-laden air can be introduced and by which dust can be separated from the dust-laden air, wherein a filter system according to one of claims 1 to 10, via which the pre-filtered air is conducted through the centrifugal force separator, is connected downstream of the centrifugal force separator in the suction flow direction.

## Revendications

1. Système de filtrage, notamment système de filtrage de poussière fine, pour un aspirateur, comprenant
- un élément de filtrage (1) destiné à filtrer les particules de poussière et/ou de saletés provenant d'air chargé en poussière,
- un dispositif de nettoyage (2) de l'élément de filtrage (1), lequel dispositif de nettoyage, pendant une opération de nettoyage, alimente un côté de sortie d'air de l'élément de filtrage (1) en apportant au moins un jet d'air de nettoyage,
le dispositif de nettoyage (2) étant conçu de manière à ce que l'au moins un jet d'air de nettoyage arrive sur l'élément de filtrage (1) essentiellement de manière ponctuelle et de manière à ce que la surface totale de l'élément de filtrage (1) soit balayée par l'au moins jet d'air de nettoyage pendant une opération de nettoyage, **caractérisé en ce que** le dispositif de nettoyage (2) présente une première douille (3) cylindrique creuse munie d'au moins une fente (7) et une deuxième douille (4) cylindrique creuse, disposée concentriquement à l'intérieur de la première douille (3), laquelle deuxième douille présente au moins une deuxième fente (8), la première fente (7) ou la deuxième fente (8) s'étendant de manière hélicoïdale sur la douille (3 ; 4), et la deuxième fente (8) resp. la première fente (7) s'étendant en direction axiale de la douille (3 ; 4), et au moins une des douilles (3 ; 4) étant logée de manière rotative.

2. Système de filtrage selon la revendication 1, **caractérisé en ce qu'**une opération de nettoyage est réalisée pendant une interruption du cycle d'aspiration de l'aspirateur.

3. Système de filtrage selon la revendication 1, **caractérisé en ce qu'**une pression du jet d'air de nettoyage est supérieure à une pression de l'air chargé de poussière à filtrer.

4. Système de filtrage selon la revendication 3, **caractérisé en ce qu'**une opération de nettoyage est réalisée au moins partiellement pendant un cycle d'aspiration.

5. Système de filtrage selon la revendication 4, **caractérisé en ce que** l'élément de filtrage (1) est alimenté en continu avec un jet d'air de nettoyage pendant le fonctionnement de l'aspirateur.

6. Système de filtrage selon l'une quelconque des revendications précédentes, **caractérisé en ce que** l'élément de filtrage (1) est conçu comme cartouche filtrante (1') cylindrique creuse, et **en ce que** le dispositif de nettoyage (2) est disposé à l'intérieur de la cartouche de filtrage (1').

7. Système de filtrage selon la revendication 1, **caractérisé en ce que** la fente (7 ; 8) hélicoïdale s'étend au moins autour de toute la circonférence de la douille (3 ; 4).

8. Système de filtrage selon l'une quelconque des revendications 6 ou 7, **caractérisé en ce que** la cartouche filtrante (1') est réalisée de manière solidaire en rotation, et **en ce que** la première douille (3) et la deuxième douille (4) tournent avec différentes vitesses de rotation pendant une opération de nettoyage.

9. Système de filtrage selon l'une quelconque des revendications 6 ou 7, **caractérisé en ce que** la première douille (3) ou la deuxième douille (4) est réalisée de manière solidaire en rotation, et **en ce que** la deuxième douille (4) resp. la première douille (3) ainsi que la cartouche filtrante (1') tournent avec différentes vitesses de rotation pendant une opération de nettoyage.

10. Système de filtrage selon l'une quelconque des revendications 6 à 9, **caractérisé en ce que** la deuxième douille (4) est fermée à une extrémité et présente sur son extrémité non fermée une entrée d'air (5), à travers laquelle l'air de nettoyage peut être introduit dans la deuxième douille (4).

11. Aspirateur comprenant un séparateur à force centrifuge dans lequel de l'air chargé de poussière peut être introduit et à travers lequel la poussière provenant de l'air chargé de poussière peut être séparée, un système de filtrage selon l'une quelconque des revendications 1 à 10 étant installé en aval du séparateur à force centrifuge dans le sens du courant d'aspiration, par l'intermédiaire duquel l'air préfiltré est conduit à travers le séparateur à force centrifuge.
